# EUROPEAN PATENT SPECIFICATION

(11) **EP 3 486 593 B1**
(45) Date of publication and mention of the grant of the patent: **02.06.2021**
(21) Application number: 18206398.2
(22) Date of filing: 15.11.2018
(51) Int. Cl.: F28D 9/00, F28F 21/08, F28F 9/02, B23K 1/00, B23K 1/19, B21D 53/08, F28D 21/00

(54) **PLATE HEAT EXCHANGER FOR AIR CONDITIONER**
PLATTENWÄRMETAUSCHER FÜR KLIMAANLAGE
ÉCHANGEUR DE CHALEUR À PLAQUE POUR CLIMATISEUR

(30) Priority: 15.11.2017 KR 20170152513
(43) Date of publication of application: 22.05.2019
(73) Proprietor: LG Electronics Inc., Seoul 07336 (KR)
(72) Inventor: Lee, Eungyul, 08592 Seoul (KR); Kim, Juhyok, 08592 Seoul (KR)
(74) Representative: Vossius & Partner Patentanwälte Rechtsanwälte mbB

(56) References cited:
- WO-A1-2011/160992
- JP-A- 2005 273 966
- JP-A- 2007 232 337
- US-A- 4 223 826
- US-A1- 2002 050 346
- US-A1- 2003 085 258
- US-A1- 2007 044 309
- US-A1- 2011 220 337
- US-A1- 2015 041 110
- US-A1- 2016 250 703

## Description

### Field of the invention

The present invention relates to a plate heat exchanger and more particularly to a plate heat exchanger, which can be manufactured in a convenient process with a reduced costs.

### Description of the Related Art

In general, the air conditioner is an apparatus for cooling or heating an indoor space using a refrigerating cycle including a compressor, an outdoor heat exchanger, an expansion device, and an indoor heat exchanger. That is, the air conditioner may include a cooler for cooling the indoor space, and a heater for heating the indoor space.

As for the heat exchangers included in the air conditioner, plate heat exchangers are used so that two heat exchange mediums are thermally exchanged without being mixed with each other.

A plate heat exchanger includes: a plurality of plates stacked to form a first flow unit and a second flow unit, through which a first heat exchange medium and a second heat exchange medium flow, respectively; a first inlet pipe through which the first heat exchange medium is introduced; a first outlet pipe through which the first heat exchange medium is discharged; a second inlet pipe through which the second heat exchange medium is introduced; and a second outlet pipe through which the second heat exchange medium is discharged. Such a plate heat exchanger is known from US2015/0041110 A1. The plates of this known heat exchanger may be made from aluminium, stainless steel or copper.

The plate heat exchanger is made in such a way that adjacent plates are bonded to each other to form the first and second flow units, respectively, and the first and second inlet and outlet pipes are brazed to the plates. In this case, use of copper to form the plates is not appropriate because of melting of the inlet and outlet pipes. For this reason, the plates are inevitably formed of a stainless steel (SUS). Such a plate heat exchanger according to the preamble of claim 1 is known from US2011/0220337 A1.

When the inlet and outlet pipes are formed of stainless steel, there are problems in that a manufacturing cost of the plate heat exchanger and a weight thereof are increased and a special welding technique is required to connect the stainless steel inlet and outlet pipes to copper pipes of an air conditioner.

### SUMMARY OF THE INVENTION

The present invention has been made in view of the above problems, and it is one object of the present invention to provide a plate heat exchanger, which can be manufactured in a simple process with an inexpensive manufacturing cost and have a less weight, and an air conditioner having the same.

In accordance with the present invention, the above and other objects can be accomplished by the provision of a plate heat exchanger according to claim 1 including: a plurality of plates stacked to form a first flow unit and a second flow unit, through which a first heat exchange medium and a second heat exchange medium flow, respectively; a first inlet pipe through which the first heat exchange medium is introduced, and a first outlet pipe through which the first heat exchange medium is discharged; and a second inlet pipe through which the second heat exchange medium is introduced, and a second outlet pipe through which the second heat exchange medium is discharged; wherein at least one of the first inlet pipe, the first outlet pipe, the second inlet pipe, or the second outlet pipe contains copper, and wherein the plurality of plates includes a phosphor bronze alloy.

Each of the plurality of plates includes 2 to 11wt% of tin, 0.05 to 0.5wt% of phosphor, and 88.5 to 97.95wt% of copper.

The plurality of plates being adjacent to each other may be bonded by brazing.

The first inlet pipe, the first outlet pipe, the second inlet pipe, and the second outlet pipe may be bonded to one of the plurality of plates by brazing.

Each of the plurality of plates may include: a first communication hole communicating with the first inlet pipe, and a second communication hole communicating with the first outlet pipe; and a third communication hole communicating with the second inlet pipe, and a fourth communication hole communicating with the second outlet pipe.

Each of the plurality of plates may have concave-convex patterns formed thereon.

According to an outdoor heat exchanger according to the present invention, there are one or more effects as below.

First, since copper pipes and inlet and outlet pipes of an air conditioner are formed of the same material, brazing of the inlet and outlet pipes and plates and brazing of the inlet and outlet pipes and the copper pipes of the air conditioner may be implemented in the same manner, and therefore, there is an advantage in that a manufacturing process is simplified.

Second, since a melting point of a plate of the present invention is lower than that of the inlet and outlet pipes, there is an advantage in that the inlet and outlet pipes do not melt during brazing of the plates and the inlet and outlet pipes.

Third, since the plates are fabricated from a phosphor bronze alloy, there is an advantage in that a manufacturing cost of a plate heat exchanger and a total weight thereof can be reduced.

Effects of the present invention should not be limited to the aforementioned effects and other unmentioned effects will be clearly understood by those skilled in the art from the claims.

### BRIEF DESCRIPTION OF THE DRAWINGS

The embodiments will be described in detail with reference to the following drawings in which the same or equivalent components may be provided with the same reference numerals wherein:
FIG. 1 is a schematic view illustrating a plate heat exchanger according to an embodiment of the present invention;
FIG. 2 is a schematic view illustrating a plate constituting the plate heat exchanger shown in FIG. 1;
FIG. 3 is a cross-sectional view of the plate heat exchanger shown in FIG. 1;
FIG. 4 is a diagram illustrating an air conditioner;
FIG. 5 is a diagram illustrating the flow of a refrigerant in an air heating operation of the air conditioner shown in Fig. 4.

### DETAILED DESCRIPTION OF THE PREFERRED EMBODIMENTS

Advantages and features of the present invention and methods for achieving those of the present invention will become apparent upon referring to embodiments described later in detail with reference to the attached drawings. However, embodiments are not limited to the embodiments disclosed hereinafter and may be embodied in different ways. The embodiments are provided for perfection of disclosure and for informing persons skilled in this field of art of the scope of the present invention. The same reference numerals may refer to the same elements throughout the specification.

Spatially-relative terms such as "below", "beneath", "lower", "above", or "upper" may be used herein to describe one element's relationship to another element as illustrated in the Figures. It will be understood that spatially-relative terms are intended to encompass different orientations of the device in addition to the orientation depicted in the Figures. For example, if the device in one of the figures is turned over, elements described as "below" or "beneath" other elements would then be oriented "above" the other elements. The exemplary terms "below" or "beneath" can, therefore, encompass both an orientation of above and below. Since the device may be oriented in another direction, the spatially-relative terms may be interpreted in accordance with the orientation of the device.

The terminology used in the present disclosure is for the purpose of describing particular embodiments only and is not intended to limit the disclosure. As used in the disclosure and the appended claims, the singular forms "a", "an" and "the" are intended to include the plural forms as well, unless context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, the thickness or size of each element is exaggerated, omitted, or schematically illustrated for convenience of description and clarity. Also, the size or area of each constituent element does not entirely reflect the actual size thereof.

Hereinafter, exemplary embodiments of the present invention will be described with reference to the accompanying drawings.

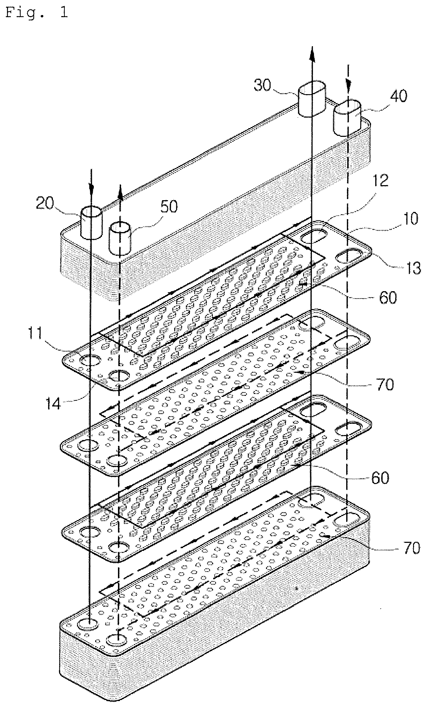

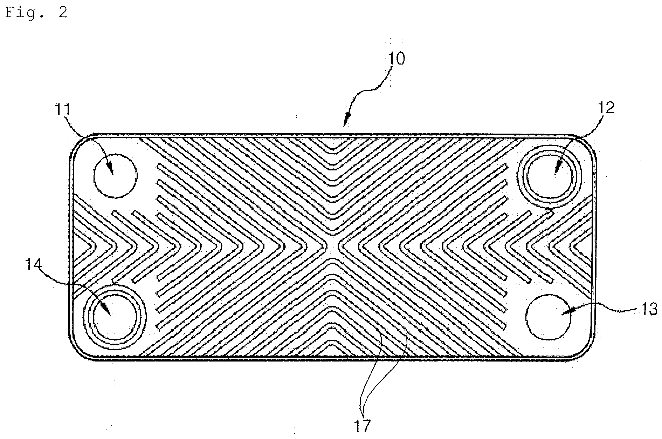

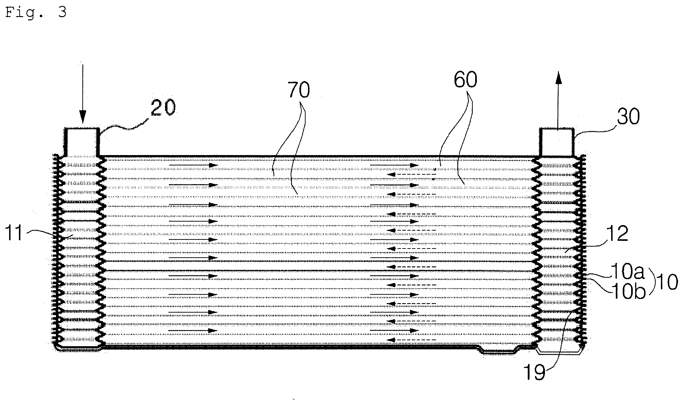

FIG. 1 is a schematic view illustrating a plate heat exchanger according to an embodiment of the present invention, FIG. 2 is a schematic view illustrating a plate constituting the heat exchanger shown in FIG. 1, and FIG. 3 is a cross-sectional view of the heat exchanger shown in FIG. 1.

Referring to FIGS. 1 to 3, a plate heat exchanger 1 according to an embodiment of the present invention includes: a plurality of plates 10 stacked to form a first flow unit 60 and a second flow unit 70, through which a first heat exchange medium and a second heat exchange medium flow, respectively; a first inlet pipe 20 through which the first heat exchange medium is introduced; a first outlet pipe 30 through which the first heat exchange medium is discharged; a second inlet pipe 40 through which the second heat exchange medium is introduced; and a second outlet pipe 50 through which the second heat exchange medium is discharged.

The first inlet pipe 20, the first outlet pipe 30, the second inlet pipe 40, and the second outlet pipe 50 are formed in the same direction in the plate heat exchanger 1. A first communication hole 11 communicating with the first inlet pipe 20, a second communication hole 12 communicating with the first outlet pipe 30, a third communication hole 13 communicating with the second inlet pipe 40, and a fourth communication hole 14 communicating with the second outlet pipe 50 are formed in the plate heat exchanger 1.

In the plate heat exchanger 1, the first flow unit 60 and the second flow unit 70 are formed alternatively in a direction in which the plurality of plates 10 is stacked, such that the first heat exchange medium and the second heat exchange medium flow independently without encountering each other. More specifically, the first heat exchange medium has one path, such that the first heat exchange medium is introduced into the first communication hole 11 through the first inlet pipe 20 formed on the left side of the top, flows in a lengthwise direction of the plurality of plates 10 while flowing downward along the first communication hole 11, flows upward along the second communication hole 12, and is then discharged through the first outlet pipe 30.

In addition, the second heat exchange medium also has one path, such that the second heat exchange medium introduced into the third communication hole 13 through the second inlet pipe 14 formed on the right side of the top flows in a lengthwise direction of the plurality of plates 10 (which is opposite of the flowing direction of the first heat exchange medium) while flowing downward through the third communication hole 13, flows upward along the fourth communication hole 14, and is then discharged through the second outlet pipe 50.

Specifically, the plurality of plates 10 includes two types of plates: a first plate 10a and a second plate 10b which are bonded by a bonding part 19 to define the first flow unit 60 and the second flow unit 70, respectively. More specifically, the plurality of plates 10 being adjacent to each other may be bonded by brazing.

The plurality of plates 10 includes a phosphor bronze alloy. The plurality of plates 10 includes 2 to 11wt% of tin, 0.05 to 0.5wt% of phosphorus, and 88.5 to 97.95wt% of copper.

If the plurality of plates 10 includes the phosphor bronze alloy, a melting point thereof is lower than a melting point of copper inlet and outlet pipes, and thus, brazing may be done using the copper inlet and outlet pipes.

Thus, if the copper inlet and outlet pipes are used, a manufacturing cost of the plate heat exchanger and a weight thereof are reduced compared to when the pipes are formed of stainless steel.

In addition, if the copper inlet and outlet pipes are used, the copper inlet and outlet pipes are formed of the same material as pipes of the air conditioner, and, in this case, any other technique is not required to braze the pipes of the air conditioner to the inlet and outlet pipes, and therefore, there is an advantage in that the manufacturing process is simplified.

Each of the plates 10 may have a flat shape or may have various concave-convex patterns 17 to enhance a heat exchange area. The patterns 17 expand a surface area of a plate 10. For example, the patterns 17 may be a plurality of protrusions protruding irregularly from the plate 10 or may be a plurality of protrusions arranged alternatively in a lengthwise direction and/or a widthwise direction of the plate 10. In another example, as shown in FIG. 2, the patterns 17 may be a plurality of ribs each having a portion which is bent at least once.

The first heat exchange medium is introduced into the first inlet pipe 20, and the first heat exchange medium thermally exchanged in the plurality of plates 10 is discharged through the first outlet pipe 30. The first inlet pipe 20 extends in an up and down direction (a direction in which the plurality of plates 10 is stacked).

The second heat exchange medium is introduced into the second inlet pipe 40, and the second heat exchange medium thermally exchanged in the plurality of plates 10 is discharged through the second outlet pipe 50. The second inlet pipe 40 extends in the up and down direction (the direction in which the plurality of plates 10 is stacked).

The first outlet pipe 30 extends in the up and down direction (the direction in which the plurality of plates 10 is stacked). The second outlet pipe 50 extends in the up and down direction (the direction in which the plurality of plates 10 is stacked).

The first inlet pipe 20, the first outlet pipe 30, the second inlet pipe 40, and the second outlet pipe 50 are brazed to at least one of the plurality of plates 10.

Specifically, the first inlet pipe 20 is brazed to an edge of the first communication hole 11, the first outlet pipe 30 is brazed to an edge of the second communication hole 12, the second inlet pipe 40 is brazed to an edge of the third communication hole 13, and the second outlet pipe 50 is brazed to the fourth communication hole 14.

More specifically, the first inlet pipe 20, the first outlet pipe 30, the second inlet pipe 40, and the second outlet pipe 50 may be brazed to a plate disposed at the highest position among the plurality of plates 10.

At least one of the first inlet pipe 20, the first outlet pipe 30, the second inlet pipe 40, or the second outlet pipe 50 contains copper Cu. If the inlet and outlet pipes contain copper Cu, it means that the inlet and outlet pipes are formed of the same material as pipes of an air conditioner connected thereto, and thus, there is an advantage in that an additional brazing technique is not required to connect the pipes of the air conditioner to the inlet and outlet pipes.

An air conditioner and a heat pump, which include the plate heat exchanger 1 of the present invention, are hereinafter described.

Embodiments of the present invention will be described with reference to drawings of an outdoor heat exchanger.

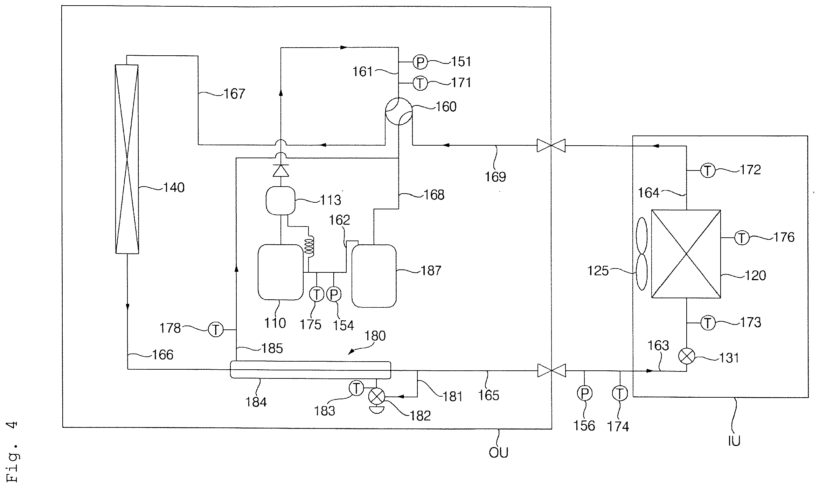

FIG. 4 is a diagram illustrating an air conditioner including a heat exchanger according to an embodiment of the present invention.

An air conditioner may include a compressor for compressing a refrigerant, a condenser for condensing the refrigerant compressed by the compressor, an expanding device for expanding the refrigerant condensed by the condenser, an evaporator for evaporating the refrigerant expanded by the expanding device, and a supercooler for causing a refrigerant of high temperature and a refrigerant of low temperature to be thermally exchanged. One of the supercooler, the condenser, and the evaporator may include the plate heat exchanger 1.

The air conditioner includes an outdoor unit OU and an indoor unit IU. In addition, the air conditioner may include a compressor 110 which compresses a refrigerant, an outdoor heat exchanger 140 in which the refrigerant compressed by the compressor 110 is condensed or a refrigerant is evaporated, and an indoor heat exchanger 120 in which the refrigerant compressed by the compressor 110 is condensed or the refrigerant condensed by the outdoor heat exchanger 140 is evaporated. The indoor heat exchanger 120 or the outdoor heat exchanger 140 may include a plate heat exchanger.

The outdoor unit OU includes the compressor 110, the outdoor heat exchanger 140, and a supercooler 180. The air conditioner may include one or a plurality of outdoor units OU.

The compressor 110 compresses an introduced refrigerant of low temperature and low pressure refrigerant into a refrigerant of high temperature and high pressure. The compressor 100 may have various structures, and an inverter type compressor or a constant speed compressor may be adopted. A discharge temperature sensor 171 and a discharge pressure sensor 151 are installed on the discharge pipe 161 of the compressor 110. In addition, a suction temperature sensor 175 and a suction pressure sensor 154 are installed on a suction pipe 162 of the compressor 110.

The outdoor unit OU includes one compressor 110, but aspects of the present invention are not limited thereto. The outdoor unit OU may include a plurality of compressors and may include both an inverter-type compressor and a constant-speed compressor.

An accumulator 187 may be installed on the suction pipe 162 of the compressor 110 in order to prevent of a liquid refrigerant from being introduced. An oil separator 113 may be installed on the discharge pipe 161 of the compressor 110 in order to recover oil from refrigerant discharged from the compressor 110.

A four-way valve 160 is a flow path switching valve for switching an air cooling operation and an air heating operation. In the cooling operation, the 4-way valve 160 guides a refrigerant compressed by the compressor 110 to the outdoor heat exchanger 140. In the heating operation, the 4-way valve 160 guides a refrigerant compressed by the compressor 110 to the indoor heat exchanger 120.

The outdoor heat exchanger 140 is disposed in an outdoor space, and a refrigerant passing through the outdoor heat exchanger 140 exchanges heat with outdoor air. The outdoor heat exchanger 140 serves as a condenser in an air cooling operation, and an evaporator in an air heating operation.

The outdoor heat exchanger 140 is connected to a junction pipe 166, thereby being connected to the indoor unit IU through a liquid pipe 165. The outdoor exchanger 140 is connected to a second inflow pipe 167, thereby being connected to the 4- way valve 160.

The super cooler 180 includes a supercooling heat exchanger 184, a second bypass pipe 181, a supercooling expansion valve 182, and a discharge pipe 185. The supercooling heat exchanger 184 is disposed on the junction pipe 166. In an air cooling operation, the second bypass pipe 181 functions to bypass the refrigerant discharged from the supercooling heat exchanger 184 so that the discharged refrigerant flows into the supercooling expansion valve 182. The supercooler 180 may be configured as the heat exchanger 1 described above with reference to FIGS. 1 to 3.

The supercooling expansion valve 182 may be disposed on the second bypass pipe 181. The supercooling expansion valve 182 lowers the pressure and temperature of a refrigerant by constricting the refrigerant of a liquid state that flows in the second bypass pipe 181 and then allows the refrigerant to flow in the supercooling heat exchanger 184. The supercooling expansion valve 182 may have various types, and a linear expansion valve may be used as the supercooling expansion valve 182 for convenience of use. A supercooling temperature sensor 183 for detecting temperature of the refrigerant constricted by the supercooling expansion valve 182 is installed on the second bypass pipe 181.

In an air cooling operation, a condensed refrigerant passing through the outdoor heat exchanger 140 is heat through a thermal exchange with a refrigerant of low temperature, flown through the second bypass pipe 181, in the supercooling heat exchanger 184, and the super-cooled refrigerant flows to the indoor unit IU.

The refrigerant passing through the second bypass pipe 181 is thermally exchanged in the supercooling heat exchanger 184, and the thermally exchanged refrigerant flows into the accumulator 187 through the discharge pipe 185. A discharge pipe temperature sensor 178 for measuring temperature of the refrigerant entering the accumulator 187 is installed on the discharge pipe 185.

A liquid pipe temperature sensor 174 and a liquid pipe pressure sensor 156 are installed on the liquid pipe 165 which couples the super cooler 180 and the indoor unit IU.

In the air conditioner, the indoor unit IU includes the indoor heat exchanger 120, an indoor fan 125, and an indoor expansion valve 131. The air conditioner may include one or a plurality of the indoor units IU.

The indoor heat exchanger 120 is disposed in an indoor space, and a refrigerant passing through the indoor heat exchanger 120 is thermally exchanged with indoor air in the indoor heat exchanger 120. The indoor heat exchanger 120 functions as an evaporator in an air cooling operation and functions as a condenser in an air heating operation. An indoor temperature sensor 176 for measuring indoor temperature is installed in the indoor heat exchanger 120.

The indoor expansion valve 131 is an apparatus for constricting a refrigerant introduced in an air cooling operation. The indoor expansion valve 131 is installed in the indoor inlet pipe 163 of the indoor unit IU. The indoor expansion valve 131 may have various types, and a linear expansion valve may be used as the indoor expansion valve 131, for convenience of use. It is preferred that the indoor expansion valve 131 be opened to a set opening degree in an air cooling operation and be fully opened in an air heating operation.

An indoor inlet pipe temperature sensor 173 is installed on the indoor inlet pipe 163. The indoor inlet pipe temperature sensor 173 may be installed between the indoor heat exchanger 120 and the indoor expansion valve 131. In addition, an indoor outlet pipe temperature sensor 172 is installed on the indoor outlet pipe 164.

In the air cooling operation of the above-described air conditioner, the flow of a refrigerant is described below.

Referring to FIG. 4, a refrigerant of a high temperature and high pressure in gaseous state, discharged from the compressor 110, flows to the outdoor heat exchanger 140 through the 4-way valve 160 and the second inflow pipe 167. The refrigerant is thermally exchanged with outdoor air in the outdoor heat exchanger 140 and thus condensed. The refrigerant drained from the outdoor heat exchanger 140 flows into the super cooler 180 through the junction pipe 166. The refrigerant is super-cooled by the supercooling heat exchanger 184, and the super-cooled refrigerant flows into the indoor unit IU.

A part of the refrigerant super-cooled by the supercooling heat exchanger 184 is constricted by the supercooling expansion valve 182, so that the refrigerant passing through the supercooling heat exchanger 184 is super-cooled. The refrigerant super-cooled by the supercooling heat exchanger 184 flows into the accumulator 187.

The refrigerant flown into the indoor unit IU is constricted by the indoor expansion valve 131 opened in a set opening degree and is then thermally exchanged with indoor air in the indoor heat exchanger 120, thereby being evaporated. The evaporated refrigerant flows into the compressor 110 through the 4-way valve 160 and the accumulator 187.

In the air heating operation of the above-described air conditioner, the flow of a refrigerant is described below.

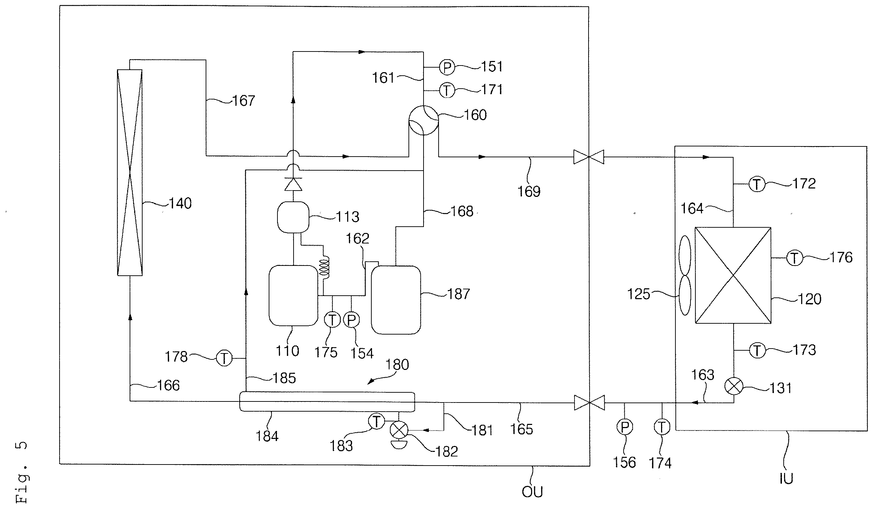

FIG. 5 is a diagram illustrating the flow of a refrigerant in the air heating operation of the air conditioner shown in FIG. 4.

Referring to FIG. 5, a refrigerant of high temperature and high pressure in gaseous state, discharged from the compressor 110, flows into the indoor unit IU through the 4-way valve 160. The indoor expansion valves 131 of the indoor unit IU are fully opened. The refrigerant drained from the indoor unit IU flows into the outdoor heat exchanger 140 through the junction pipe 166 166 and is then thermally exchanged with outdoor air in the outdoor heat exchanger 140, thereby being evaporated. The evaporated refrigerant flows into the suction pipe 162 of the compressor 110 through the 4-way valve 160 and the accumulator 187 through the second inflow pipe 167.

Although not illustrated in the drawings, another embodiment may include a heat pump, which includes: a first cycle device in which a first refrigerant circulates, a second cycle device in which a second refrigerant circulates, and a plate heat exchanger 1 which causes the first refrigerant and the second refrigerant to be thermally exchanged. The first refrigerant may be ammonia or propane gas, and the second refrigerant may be water.

Here, the configuration of the plate heat exchanger is the same as described above.

Although the preferred embodiments of the present invention have been illustrated and described, the present invention is not limited to the above specific embodiments, and a person having ordinary skill in the art to which the invention belongs may modify the embodiments in various ways without departing from the scope of the present invention which is claimed in the claims. The modified embodiments should not be interpreted individually from the prospect of the present invention.

## Claims

1. A plate heat exchanger (1) comprising:
a plurality of plates (10) stacked to form a first flow unit (60) and a second flow unit (70), through which a first heat exchange medium and a second heat exchange medium flow, respectively;
a first inlet pipe (20) through which the first heat exchange medium is introduced, and a first outlet pipe (30) through which the first heat exchange medium is discharged; and
a second inlet pipe (40) through which the second heat exchange medium is introduced, and a second outlet pipe (50) through which the second heat exchange medium is discharged;
wherein at least one of the first inlet pipe (20), the first outlet pipe (30), the second inlet pipe (40), or the second outlet pipe (50) contains copper, **characterised in that**
the plurality of plates (10) comprises a phosphor bronze alloy,
wherein the plurality of plates (10) comprises 2 to 11wt% of tin, 0.05 to 0.5wt% of phosphor, and 88.5 to 97.95wt% of copper.

2. The plate heat exchanger (1) of claim 1, wherein the plurality of plates (10) being adjacent to each other is bonded by brazing.

3. The plate heat exchanger (1) of claim 1 or 2, wherein the first inlet pipe (20), the first outlet pipe (30), the second inlet pipe (40), and the second outlet pipe (50) are bonded to one of the plurality of plates (10) by brazing.

4. The plate heat exchanger (1) of any one of claims 1 to 3, wherein each of the plurality of plates (10) comprises:
a first communication hole (11) communicating with the first inlet pipe (20), and a second communication hole (12) communicating with the first outlet pipe (30); and
a third communication hole (13) communicating with the second inlet pipe (40), and a fourth communication hole (14) communicating with the second outlet pipe (50).

5. The plate heat exchanger (1) of any one of claims 1 to 4, wherein each of the plurality of plates (10) further comprises patterns (17) that expand a surface area of a corresponding plate.

6. The plate heat exchanger (1) of any one of claims 1 to 5, wherein the first inlet pipe (20) and the second inlet pipe (40) extend in an up and down direction.

7. The plate heat exchanger (1) of any one of claims 1 to 6, wherein the first outlet pipe (30) and the second outlet pipe (50) extend in an up and down direction.

## Patentansprüche

1. Plattenwärmetauscher (1) mit:
mehreren Platten (10), die gestapelt sind, um eine erste Strömungseinheit (60) und eine zweite Strömungseinheit (70) zu bilden, durch die ein erstes Wärmeaustauschmedium bzw. ein zweites Wärmeaustauschmedium strömen;
eine erste Einlassleitung (20), durch die das erste Wärmeaustauschmedium eingeleitet wird, und eine erste Auslassleitung (30), durch die das erste Wärmeaustauschmedium abgegeben wird; und
eine zweite Einlassleitung (40), durch die das zweite Wärmeaustauschmedium eingeleitet wird, und eine zweite Auslassleitung (50), durch die das zweite Wärmeaustauschmedium abgegeben wird;
wobei mindestens eine der ersten Einlassleitung (20), der ersten Auslassleitung (30), der zweiten Einlassleitung (40) oder der zweiten Auslassleitung (50) Kupfer enthält, **dadurch gekennzeichnet. dass**
die mehreren Platten (10) eine Phosphorbronze-Legierung aufweisen,
wobei die mehreren Platten (10) 2 bis 11 Gew.-% Zinn, 0,05 bis 0,5 Gew.-% Phosphor und 88,5 bis 97,95 Gew.-% Kupfer aufweisen.

2. Plattenwärmetauscher (1) nach Anspruch 1, wobei die mehreren Platten (10), die zueinander benachbart sind, durch Hartlöten verbunden sind.

3. Plattenwärmetauscher (1) nach Anspruch 1 oder 2, wobei die erste Einlassleitung (20), die erste Auslassleitung (30), die zweite Einlassleitung (40) und die zweite Auslassleitung (50) mit einer der mehreren Platten (10) durch Hartlöten verbunden sind.

4. Plattenwärmetauscher (1) nach einem der Ansprüche 1 bis 3, wobei jede der mehreren Platten (10) aufweist:
ein erstes Verbindungsloch (11), das mit der ersten Einlassleitung (20) in Verbindung steht, und ein zweites Verbindungsloch (12), das mit der ersten Auslassleitung (30) in Verbindung steht; und
ein drittes Verbindungsloch (13), das mit der zweiten Einlassleitung (40) in Verbindung steht, und ein viertes Verbindungsloch (14), das mit der zweiten Auslassleitung (50) in Verbindung steht.

5. Plattenwärmetauscher (1) nach einem der Ansprüche 1 bis 4, wobei jede der mehreren Platten (10) ferner Muster (17) aufweist, die sich über einen Oberflächenbereich einer entsprechenden Platte ausdehnen.

6. Plattenwärmetauscher (1) nach einem der Ansprüche 1 bis 5, wobei sich die erste Einlassleitung (20) und die zweite Einlassleitung (40) in einer Aufwärts- und Abwärtsrichtung erstrecken.

7. Plattenwärmetauscher (1) nach einem der Ansprüche 1 bis 6, wobei sich die erste Auslassleitung (30) und die zweite Auslassleitung (50) in einer Aufwärts- und Abwärtsrichtung erstrecken.

## Revendications

1. Échangeur thermique à plaques (1), comprenant :
une pluralité de plaques (10) empilées pour former une première unité d'écoulement (60) et une deuxième unité d'écoulement (70) où s'écoulent respectivement un premier fluide caloporteur et un deuxième fluide caloporteur ;
une première conduite d'entrée (20) par laquelle le premier fluide caloporteur est introduit, et une première conduite de sortie (30) par laquelle le premier fluide caloporteur est évacué ; et
une deuxième conduite d'entrée (40) par laquelle le deuxième fluide caloporteur est introduit, et une deuxième conduite de sortie (50) par laquelle le deuxième fluide caloporteur est évacué ;
où au moins une conduite parmi la première conduite d'entrée (20), la première conduite de sortie (30), la deuxième conduite d'entrée (40) et la deuxième conduite de sortie (50) contient du cuivre, **caractérisé en ce que**
la pluralité de plaques (10) comprend un alliage de bronze phosphoreux,
la pluralité de plaques (10) comprenant entre 2 et 11 % en poids d'étain, entre 0,05 et 0,5 % en poids de phosphore, et entre 88,5 et 97,95 % en poids de cuivre.

2. Échangeur thermique à plaques (1) selon la revendication 1, où la pluralité de plaques (10) adjacentes l'une à l'autre sont liées par brasure.

3. Échangeur thermique à plaques (1) selon la revendication 1 ou la revendication 2, où la première conduite d'entrée (20), la première conduite de sortie (30), la deuxième conduite d'entrée (40) et la deuxième conduite de sortie (50) sont liées par brasure à une plaque de la pluralité de plaques (10).

4. Échangeur thermique à plaques (1) selon l'une des revendications 1 à 3, où chaque plaque de la pluralité de plaques (10) comprend :
un premier orifice de communication (11) communiquant avec la première conduite d'entrée (20), et un deuxième orifice de communication (12) communiquant avec la première conduite de sortie (30) ; et
un troisième orifice de communication (13) communiquant avec la deuxième conduite d'entrée (40), et un quatrième orifice de communication (14) communiquant avec la deuxième conduite de sortie (50).

5. Échangeur thermique à plaques (1) selon l'une des revendications 1 à 4, où chaque plaque de la pluralité de plaques (10) comprend en outre des motifs (17) agrandissant une zone de surface d'une plaque correspondante.

6. Échangeur thermique à plaques (1) selon l'une des revendications 1 à 5, où la première conduite d'entrée (20) et la deuxième conduite d'entrée (40) s'étendent vers le haut et vers le bas.

7. Échangeur thermique à plaques (1) selon l'une des revendications 1 à 6, où la première conduite de sortie (30) et la deuxième conduite de sortie (50) s'étendent vers le haut et vers le bas.
